Europäisches Patentamt

European Patent Office

Office européen des brevets

(11) Publication number: **0 402 672**
**A2**

## EUROPEAN PATENT APPLICATION

(21) Application number: **90109871.5**

(22) Date of filing: **23.05.90**

(51) Int. Cl.5: **C04B 35/58, C01B 21/064**

(30) Priority: **16.06.89 US 367299**

(43) Date of publication of application:
**19.12.90 Bulletin 90/51**

(84) Designated Contracting States:
**AT BE CH DE DK ES FR GB LI NL SE**

(71) Applicant: **GENERAL ELECTRIC COMPANY**
**1 River Road**
**Schenectady New York 12305(US)**

(72) Inventor: **Corrigan, Francis Raymond**
**641 College Crest Drive**
**Westerville, Ohio 43081(US)**

(74) Representative: **Catherine, Alain**
**General Electric France Service de Propriété**
**Industrielle 18 Rue Horace Vernet**
**F-92136 Issy-Les-Moulineaux Cedex(FR)**

(54) Process for preparing polycrystalline cubic boron nitride and resulting product.

(57) The present invention is directed to an HP/HT process for making polycrystalline CBN particles and compacts from GBN in the substantial absence of bulk catalytically-active material. The inventive process modulates the HP/HT conditions of the process and comprises incorporating into said GBN, non-BN atoms or clusters thereof in an amount for at least lowering the pressure required for making said polycrystalline CBN in the absence of said atoms or clusters thereof. The presence of non-BN atoms/clusters or foreign atoms can be termed "doping" and should be contrasted to the formation of a "composite". Doping of GBN with foreign atoms in accordance with the present invention involves the atomic level dispersion of foreign atoms independent of concentration. Thus, for present purposes, it is the size of foreign atoms and their distribution that determines whether a doped GBN material for processing in accordance with the present invention has been made or whether a conventional composite has been made. A composite, it will be appreciated, refers to the bulk addition of foreign material to GBN. In this regard, it should be understood that the same percentage of foreign atoms may be defined as suitable for producing a "composite" conventionally, but that this definition refers to macroscopic (particle size) mixtures; whereas, the same percentage may be termed a "doped" mixture for present purposes if the foreign atoms are present in an atomic level dispersion of atoms or clusters thereof. The resulting CBN product forms yet another aspect of the present invention.

EP 0 402 672 A2

# PROCESS FOR PREPARING POLYCRYSTALLINE CUBIC BORON NITRIDE AND RESULTING PRODUCT

## Background of the Invention

The present invention relates to a process for making polycrystalline cubic boron nitride (CBN) from graphitic boron nitride (GBN) and more particularly to a direct conversion process which utilizes modulated high pressure/high temperature (HP/HT) processing conditions.

Three crystalline forms of boron nitride are known: (1) soft graphitic (hexagonal) form (HBN) similar in structure to graphite carbon, (2) a hard wurtzitic (hexagonal) form (WBN) similar to hexagonal diamond, and (3) a hard zincblende (cubic) form (CBN) similar to cubic diamond. The three boron nitride (BN) crystal structures may be visualized as formed by stacking of a series of sheets (layers) of atoms. In the low pressure graphitic structure the stacking layers are made up of plain or fused hexagons (like bathroom tile) in which the vertices of the hexagons are occupied alternately by boron and nitrogen atoms and stacked vertically such that the B and N atoms also alternate in the stacking [001] direction. In the more dense CBN and WBN crystal structures, the atoms of the stacking layers are puckered out-of-plane and the two dense structures result from variation in the stacking of the layers.

In HBN and WBN crystals the layers are stacked along the [001] direction (i.e. the c crystallographic axis is perpendicular to the layers) whereas in the CBN crystal the layers are stacked along the [111] direction. These layers are referred to as hexagonal stacking layers or planes. In HBN, bonding between the atoms within the layers is predominantly of the strong covalent type, but with only weak van der waals bonding between layers. In WBN and CBN, strong, predominantly covalent tetrahydral bonds are formed between each atom and its four neighbors.

Known processes for making polycrystalline CBN compacts and mesh CBN can be generally classified in four categories as follows: (1) catalytic conversion process, a one-step process in which a catalyst metal or alloy aids in the transition of HBN to CBN simultaneously with the formation of single-crystal CBN particles or a compact thereof; (2) bonding medium process, a two-step process in which the first step comprises the conversion of HBN to CBN and the second step comprises the formation of a compact from cleaned CBN crystals mixed with a metal or alloy which aids in the bonding of the CBN into a compact; (3) direct sintering process, a two-step process which is the same as process (2) except that the compact is formed without addition of metal or alloy to aid in bonding CBN crystals; and (4) direct conversion process, a one-step process in which substantially pure HBN is transformed directly to a CBN compact or polycrystalline CBN particles without the aid of a catalyst and/or a bonding medium.

The catalytic and bonding medium processes generally are disadvantageous because the catalyst and bonding medium are lower in hardness than CBN and are retained in the resultant mass, thus reducing the hardness and abrasive resistance thereof. Particular reference can be made to U.S. Pats. Nos. 3,233,988 and 3,918,219 for a more detailed discussion of catalytically formed CBN compacts and to U.S. Pats. Nos. 3,743,489 and 3,767,371 for the details of CBN compacts utilizing a bonding medium.

A preferred direct conversion process is disclosed in U.S. Pat. No. 4,188,194 wherein a sintered polycrystalline CBN compact is made by placing preferentially oriented pyrolytic hexagonal boron nitride in a reaction cell wherein the boron nitride is substantially free of catalytically active materials. The cell and the contents then are compressed at a pressure of between about 50 Kbars and 100 Kbars while being heated to a temperature of at least about $1800^\circ$ C within the CBN stable region of the BN phase diagram. The HP/HT conditions then are maintained for a period of time sufficient for the pyrolytic boron nitride to transform into a sintered polycrystalline cubic boron nitride compact. When HBN is milled to a small particle size (large surface area), an improvement in such process is disclosed in U.S. Pat. No. 4,289,503 wherein boric oxide is removed from the surface of the HBN powder before the conversion process. Such pretreatment is carried out at a temperature in the hexagonal boron nitride thermal decomposition range and is accomplished by vacuum firing and heating under vacuum or inert atmosphere.

A reduction in the pressing conditions (pressure and/or temperature) required for direct conversion of the graphitic boron nitride (PBN or HBN) starting material to the cubic phase would be advantageous with respect to high pressure apparatus life, productivity, and cost.

## Broad Statement of the Invention

The present invention is directed to an HP/HT process for making polycrystalline CBN particles and compacts from GBN (including PBN, HBN, and mixtures) in the substantial absence of bulk catalytically-active material. The inventive process modulates the HP/HT conditions of the process and comprises incorporating into said GBN, non-BN atoms or clusters thereof in an amount for at least lowering the pressure required for making said polycrystalline CBN in the absence of said atoms or clusters thereof. The presence of non-BN atoms/clusters or foreign atoms can be termed "doping" and should be contrasted to the formation of a "composite" as disclosed in commonly-assigned U.S.S.N. 269,965, filed November 10, 1988. Doping of GBN with foreign atoms in accordance with the present invention involves the atomic level dispersion of foreign atoms independent of concentration. Thus, for present purposes, it is the size of foreign atoms and their distribution that determines whether a doped GBN material for processing in accordance with the present invention has been made or whether a conventional composite has been made. A composite, it will be appreciated, refers to the bulk addition of foreign material to GBN. In this regard, it should be understood that the same percentage of foreign atoms may be defined as suitable for producing a "composite" conventionally, but that this definition refers to macroscopic (particle size) mixtures; whereas, the same percentage may be termed a "doped" mixture for present purposes if the foreign atoms are present in an atomic level dispersion of atoms or clusters thereof. The resulting CBN product forms yet another aspect of the present invention.

Advantages of the present invention include the ability to reduce the pressing conditions (HP and/or HT) required for conversion of the graphitic boron nitride (PBN or HBN) starting material to the cubic phase. A correlary advantage to reduced pressing conditions comprises the extension of the useful life of the high pressure apparatus utilized in making the CBN product. Yet another advantage includes improved productivity resulting by the reduction in pressing conditions as well as reduced manufacturing costs. These and other advantages will be readily apparent to those skilled in the art based upon the disclosure contained herein.

Detailed Description of the Invention

The primary mechanism in HP/HT direct conversion processes is the thermal energy induced breaking and reforming of interatomic bonds (i.e. transfer of electrons between different bonding energy states) with atom movement being small and only of secondary importance, and with neighboring atoms retaining their same relative positions one to the other in the starting and converted phases. The direct conversion process, therefore, will be sensitive to the energy state of the starting material used in the conversion process with an increase in the energy state of the starting material effectively decreasing the height of the potential energy barrier for direct phase conversion. A decrease in the potential energy barrier will allow for a decrease in the energy needed for conversion, which in the case of thermally-induced conversion, will allow for conversion to proceed at lower temperatures and, hence, lower pressures. Modifications to the lattice structure of the starting material which increase the lattice energy state and lower the potential energy conversion barrier, thus, will allow conversion to proceed at modulated pressure and temperature conditions. Introduction of foreign atoms or groups of atoms in the GBN structure is a method for increasing the lattice energy state of the GBN structure.

Another method for increasing the lattice energy state is to decrease the particle (crystallite) size to the size region where the surface energy states make an appreciable contribution to the lattice energy state, resulting in size dependent variation of the particle properties. Typically, the change from bulk properties to size-dependent properties occurs at sizes of the order of 20 to greater than 100 atoms per particle. Particle sizes in this range are referred to as "atom clusters". It has been demonstrated that the ionization potential, electron affinity, energy band structure, and lattice parameter depends on size in the atom cluster range. Chaikofskii, et al., Sov. Phys. Dokl., 29 (12), 1043 (Dec. 1984) discuss the effect that the crystallite size can have on the phase equilibrium in the graphite-diamond system.

In order to take advantage of the higher lattice energy state, it is necessary to prevent growth of the atom cluster-size crystallites to sizes where bulk properties are evident prior to conversion. In the graphite-diamond system, Chaikofskii, et al., ibid, propose localized heating of the individual crystallites, thereby supplying sufficient energy to the crystallites to overcome the transformation energy barrier without imparting sufficient energy to the adjacent crystallites to cause crystallite growth of the graphite phase. In accordance with the present invention, another way to prevent crystallite growth would be to isolate the individual crystallites (e.g. GBN crystallites) one from the other by secondary or barrier phases (of crystallite or bulk size) incorporated during preparation of the mixed or conjoint starting material.

Simultaneous preparation of the component phases during formation of the starting material should permit obtaining of CBN masses having extremely fine component grain sizes down to the atom cluster size range with appropriate second phase barriers and, thus, permit modulation of the conditions required for conversion of the graphitic phase to the cubic phase.

Although new process development may result in alternative techniques for implementation of the starting material modifications of the present invention, chemical vapor deposition (CVD), solgel and polymer pyrolysis techniques, and combustion synthesis processes should be particularly suitable techniques for implementation of such starting material modifications.

CVD processes currently are used in a variety of fields as those in the art will appreciate. Commercially, CVD is used to produce pyrolytic boron nitride, for example. In this process, boron trichloride and ammonia gases are allowed to flow through a high temperature furnace where reaction occurs and boron nitride is deposited on suitable substrates yielding large macroscopic pieces. This process can be adapted suitably to the production of the various type of modified starting materials disclosed herein. Introduction of suitable gases during the pyrolytic deposition process allows for codeposition of various second phases during the PBN deposition, e.g. introduction of $TiCl_4$ gas to obtain BN/TiN composites. By alternating the gas flow through the furnace, alternate layer type structures also could be obtained. Since the resulting products are obtained as large pieces, internal purity is maintained prior to HP/HT conversion of the GBN composites to yield CBN based composites. These same processing techniques should be available for deposition of graphite and foreign atoms/clusters. Further information on co-deposition of boron nitride and carbon materials may be found in the following citation: Moore, et al., "Properties and Characterization of Co-deposited Boron Nitride and Carbon Materials", to be published in J. Appl. Phys., June, 1989.

It should be possible to disperse secondary phases in low pressure boron nitride during preparation by solgel techniques to form BN/secondary phase mixes for subsequent use as a starting material for the HP/HT preparation of CBN. The dispersion may be a catalyst (i.e. lithium nitride, magnesium, magnesium nitride, or the like) for the production of single crystal CBN, a conversion enhancer (i.e. aluminum boride, magnesium boride, nickel boride, or the like) for preparing polycrystalline CBN, or composite forming materials (i.e. TiN, TiC, or the like) for preparing CBN based composites. Since the solgel method for preparing BN starts with a liquid, incorporation of a second phase during solgel processing will allow obtaining extremely good homogeneity of fine powder mixtures with BN which is difficult to accomplish by mixing of BN in secondary phase powders, for example. The solgel prepared mixtures would yield more uniformly dispersed and finer particle mixtures as starting materials for CBN production processes in accordance with the present invention and allow preparation of improved homogeneity of fine grain CBN composites. Further on solgel techniques can be found in Narula, "Precursors to Boron-Nitrogen Macromolecules and Ceramics", Mat. Res. Soc. Symp. Proc., vol. 73, 383, Materials Research Society (1986) and Research and Development, Dec. 1987, p. 49.

Combustion synthesis is a relatively new process for producing refractory compounds. BN and various nitride composite materials have been reported to be prepared by this process. The products can be obtained in solid, compacted form which would allow maintenance of purity prior to HP/HT processing. Because combustion synthesis involves high temperatures with rapid heating and cooling rates, the possibility of producing non-equilibrium materials is enhanced greatly (cubic TaN was first reported by combustion synthesis before it was synthesized by high pressure techniques). Further information on combustion synthesis can be found in the following: "Combustion Synthesis: A New Area of Research in Materials Science", Los Alamos National Laboratory report pp. 11-29 (circa 1985).

Since the conversion process in one embodiment of the present invention relies on the presence of foreign atoms for increasing the energy state resulting in a lower potential energy barrier for the conversion process, the particular composition of the foreign atom or clusters is not critical but could have an effect on the process and CBN product produced. Of practical limitation, is the ability to incorporate atoms or clusters of the desired foreign atom into the starting GBN or graphite material. Thus, utilizing CVD, solgel or polymer pyrolysis techniques, and combustion synthesis processing techniques, the foreign atoms or clusters must be produced thereby. As the examples will demonstrate, GBN has been modified with zirconium, carbon, titanium, and silicon. Each of these modified samples were directly converted to CBN composite products utilizing HP/HT conditions which were reduced from those conditions which are required in the substantial absence of such second-phase material. Other suitable atom/clusters which may find use in the process for CBN, include for example, aluminum, magnesium, and Group IVa, Va, and VIa elements and transition metals.

In practicing the present invention, utilization of conventional HP/HT equipment and processing techniques as well known in the art is practiced. Of importance, however, is the ability to at least reduce the pressure required in the conversion process. Often, both the pressure and temperature can be reduced by incorporation of the foreign atoms or clusters into the starting material. The proportion of foreign atom/cluster incorporation can range from less than about 1% on up to 10% or more (e.g. at greater than about 50% composites are made, so such figure represents a definitional upper limit). Conversion times

4

also may be decreased by practice of the present invention. In this application, all percentages and proportions are by weight and all units are in the metric system, unless otherwise expressly indicated. Also, all citations are expressly incorporated herein by reference.

## EXAMPLES

## EXAMPLE 1

Codeposited Zr/PBN samples were evaluated with respect to the affect which the Zr has on the HP/HT direct conversion of PBN to CBN. Sample ZA was light gray in color and apparently contained less than 1 wt-% Zr based on the detection limits of X-ray diffraction, EDAX analysis (0.5-1 wt% detection limit) and XRF analysis. Sample ZB was cream colored and apparently contained between about 1 and 5 wt-% Zr based on the detection limits of the analytical equipment noted above and interpretation of peak heights from the EDAX analysis.

Samples of the two Zr-doped products and undoped PBN were subjected to HP/HT processing as described in U.S. Pat. No. 4,188,194. The following results were recorded.

TABLE 1

| PBN Conversion | | | | |
|---|---|---|---|---|
| Temp. (°C) | Pressure (kbar) | Undoped (PBN) | ZA | ZB |
| 1800 | 68 | — | — | Complete |
| 1800 | 65 | Complete | Complete | Complete |
| 1800 | 62 | Partial | Partial | Complete |
| 1800 | 60 | None | Partial | Complete |
| 1800 | 59 | None | Partial | Complete |

These results indicate that small additions of second-phase co-deposited metals have a significant affect on PBN to CBN processing conditions--most notably pressure.

## EXAMPLE 2

Additional co-deposited PBN samples were evaluated. The carbon-doped sample contained 3% C. The Ti and Si-doped samples were estimated to contain between 1 and 5 wt-% Ti and Si based on the analytical techniques described in Example 1. The following results were recorded.

TABLE 2

| PBN Conversion | | | | | | |
|---|---|---|---|---|---|---|
| Pressure (kbar) | Temp. (°C) | Time (min) | Undoped (PBN) | C Doped | Si Doped | Ti Doped |
| 65 | 1900 | 4 | Complete | Complete | Complete | Complete |
| 61 | 1800 | 4 | 0-20% | Complete | 90% | — |
| 59 | 1800 | 4 | None | — | — | Complete |
| 58 | 1700 | 8 | None | — | 90% | Complete |
| 58 | 1700 | 4 | None | None | 20% | — |
| 56 | 1650 | 10 | None | — | — | 60% |

The above-tabulated results demonstrate that foreign atoms or clusters in the PBN have the ability to reduce the HP/HT conditions in the CBN conversion process. The type and concentration of the foreign atoms apparently can be varied widely also.

**Claims**

1. In an HP/HT process for making polycrystalline CBN from GBN in the substantial absence of bulk catalytically-active material, the improvement in modulating the HP/HT conditions which comprises doping said GBN with non-BN atoms or clusters thereof in an amount for at least lowering the HP required for making said polycrystalline CBN in the absence of said atoms or clusters thereof.

2. The process of claim 1 wherein the proportion of non-BN atoms or clusters incorporated into said GBN ranges from between about 1 and 50 percent by weight.

3. The process of claim 2 wherein the proportion of said non-BN atoms or clusters ranges from between about 1 and 10 percent by weight.

4. The process of claim 1 wherein said GBN is selected from the group consisting of PBN, HBN, or mixtures thereof.

5. The process of claim 1 wherein said doped GBN is made by chemical vapor deposition.

6. The process of claim 1 wherein said doped GBN is made by solgel techniques.

7. The process of claim wherein said doped GBN is made by polymer pyrolysis techniques.

8. The process of claim 1 wherein said doped GBN is made by combustion synthesis techniques.

9. The process of claim 1 wherein said non-BN atoms or clusters are selected from the group consisting of aluminum, magnesium, zirconium, carbon, titanium, silicon, lithium nitride, magnesium nitride, aluminum boride, magnesium boride, nickel boride, titanium nitride, titanium carbide, and Group IVa, Va, and VIa elements and transition metals, and mixtures thereof.

10. The process of claim 1 wherein said polycrystalline CBN comprises particles thereof.

11. The process of claim 1 wherein said polycrystalline CBN comprises a compact thereof.

12. A polycrystalline CBN product comprising polycrystalline CBN and non-BN containing atoms or clusters thereof in an amount for at least lowering the HP required for making said polycrystalline CBN product in the absence of said non-BN atoms or clusters thereof, said polycrystalline CBN product being substantially devoid of bulk catalytically-active material.

13. The product of claim 11 wherein the proportion of non-BN atoms or clusters incorporated into said GBN ranges from between about 1 and 50 percent by weight.

14. The product of claim 13 wherein the proportion of said non-BN atoms or clusters ranges from between about 1 and 10 percent by weight.

15. The product of claim 12 wherein said GBN is selected from the group consisting of PBN, HBN, or mixtures thereof.

16. The product of claim 12 wherein said doped GBN is made by chemical vapor deposition.

17. The product of claim 12 wherein said doped GBN is made by solgel techniques.

18. The product of claim 12 wherein said doped GBN is made by polymer pyrolysis techniques.

19. The product of claim 12 wherein said doped GBN is made by combustion synthesis techniques.

20. The product of claim 12 wherein said non-BN atoms or clusters are selected from the group consisting of aluminum, magnesium, zirconium, carbon, titanium, silicon, lithium nitride, magnesium nitride, aluminum boride, magnesium boride, nickel boride, titanium nitride, titanium carbide, and Group IVa, Va, and VIa elements and transition metals, and mixtures thereof.

21. The product of claim 13 wherein said polycrystalline CBN comprises particles thereof.

22. The product of claim 12 wherein said polycrystaltine CBN comprises a compact thereof.

23. In an HP/HT process for making polycrystalline CBN from GBN in the substantial absence of bulk catalytically-active material, the improvement in modulating the HP/HT conditions which comprises providing GBN atoms or clusters thereof isolated from each other by non-GBN atoms, clusters thereof, or particles for at least lowering the HP required for making said polycrystalline CBN in the absence thereof.

24. The process of claim 23 wherein the proportion of said non-GBN atoms, clusters thereof, or particles ranges up to about 50% by weight.

25. The process of claim 23 wherein said GBN is selected from the group consisting of PBN, HBN, or mixtures thereof.

26. The process of claim 23 wherein said isolated GBN is made by chemical vapor deposition.

27. The process of claim 23 wherein said isolated GBN is made by solgel techniques.

28. The process of claim 23 wherein said isolated GBN is made by polymer pyrolysis techniques.

29. The process of claim 23 wherein said isolated GBN is made by combustion synthesis techniques.

30. The process of claim 23 wherein said non-GBN atoms, clusters thereof, or particles are selected from the group consisting of aluminum, magnesium, zirconium, carbon, titanium, silicon, lithium nitride, magnesium nitride, aluminum boride, magnesium boride, nickel boride, titanium nitride, titanium carbide, and Group IVa, Va, and VIa elements and transition metals, and mixtures thereof.

31. The product of the process of claim 23.

32. The product of the process of claim 30.